# EUROPEAN PATENT APPLICATION

(11) **EP 1 993 028 A1**
(43) Date of publication of application: **19.11.2008**
(21) Application number: 08002199.1
(22) Date of filing: 06.02.2008
(51) Int. Cl.: G06F 3/048

(54) **Method and device for handling large input mechanisms in touch screens**

(30) Priority: 15.05.2007 US 748498
(71) Applicant: High Tech Computer Corp., Taoyuan City, Taoyuan County 330 (TW)
(72) Inventor: Hsu, Chih-Feng, Taoyuan City Taoyuan County (TW); Kao, Yih-Feng, Taoyuan City Taoyuan County (TW); Wang, John C., Taoyuan City Taoyuan County (TW)
(74) Representative: Weber, Joachim

(57) **Abstract**

A method of displaying controls in a touch panel (602) includes detecting contact of an object with the touch panel (402), determining a dimension of the object contacting the touch panel (403), and increasing a size of controls corresponding to the contact of the object when the dimension of the object is greater than a predetermined threshold (404).

## Description

The present invention relates to a method for handling large input mechanisms in touch screens and related device according to the pre-characterizing clause of claims 1, 2, 3, 4, 5, and 6.

On many electronic devices, such as PDAs, touch screens are used as a primary input device. When using a touch screen, users simply point to an item with a stylus or their finger to select and launch a program or application. A common problem occurs when utilizing a touch screen. Touch screens often suffer certain limitations and disadvantages. For example, a stylus is small enough for precision pointing. But, a user's finger may be too large for accurate pointing on small objects, especially if panel controls are in close proximity to one another. This lack of precision often results in wrong controls being selected on smaller panel displays.

Another related problem in the prior art is caused by the nature of electronic devices that utilize touch panels. Generally, the housing of the conventional handheld device is tightly adjacent to the edges of the display area of the touch display, and protrudes higher than the touch-sensitive plane of the touch display. Since the protruding portion of the housing hinders touch operation of the input tools, including fingers and stylus, the user cannot effectively and rapidly reach the peripheral pixels of the display area of the touch display, and thereby is unable to experience smooth touch operation. Furthermore, the non-display area of the touch display, which is typically covered by the housing of the conventional handheld device, is still touch-sensitive, so the housing of the conventional handheld device not only hinders the touch operation of the user, but also limits possible applications of the touch display.

This in mind, the present invention aims at providing a method for handling large input mechanisms in touch screens and related device that increases input accuracy.

This is achieved by a method for handling large input mechanisms in touch screens and related device according to claims 1, 2, 3, 4, 5, and 6. The dependent claims pertain to corresponding further developments and improvements.

As will be seen more clearly from the detailed description following below, the claimed method for handling large input mechanisms in touch screens and related device includes increasing a size of at least one control corresponding to contact of an object when a dimension of the object is greater than a predetermined threshold.

In the following, the invention is further illustrated by way of example, taking reference to the accompanying drawings. Thereof
Fig. 1 is a diagram of an input mechanism contacting a touch screen according to the prior art,
Fig. 2 is a diagram of another input mechanism contacting the touch screen according to the prior art,
Fig. 3 is a diagram of displaying an enlarged section in a touch screen in response to contact by a large input mechanism according to the present invention,
Fig. 4 is a flowchart of a method of displaying controls in the touch screen of the present invention,
Fig. 5 is a diagram of the touch screen according to a second embodiment of the present invention, and
Figs. 6A and 6B are diagrams of an electronic device for providing unhindered touch operation according to the present invention.

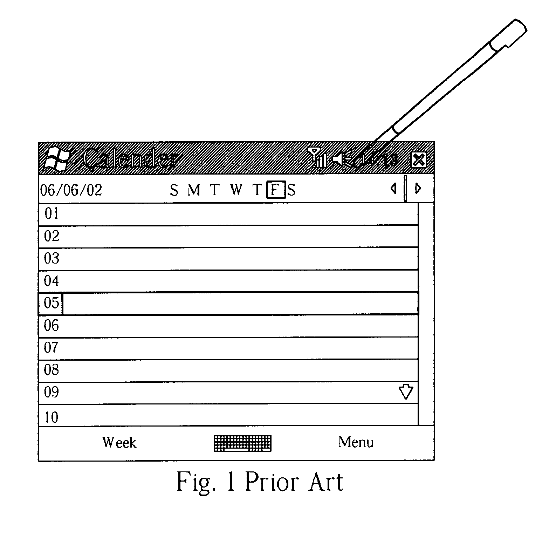

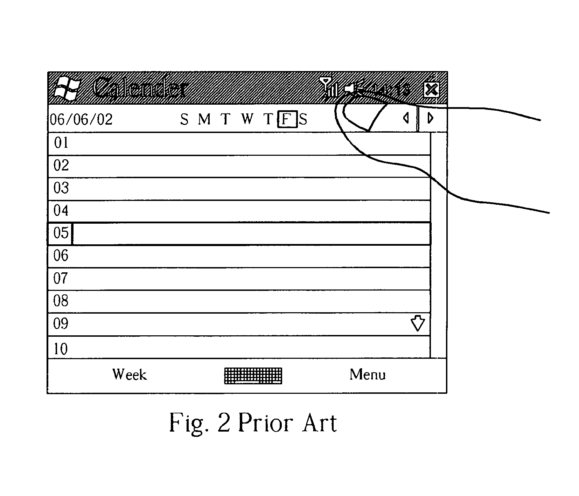

Please refer to Figs. 1 and 2, which are diagrams illustrating a common problem that occurs when utilizing a touch screen. Touch screens often suffer certain limitations and disadvantages. As shown in Fig. 1, a stylus is small enough for precision pointing. But, as shown in Fig. 2, a user's finger may be too large for accurate pointing on small objects, especially if panel controls are in close proximity to one another. This lack of precision often results in wrong controls being selected on smaller panel displays.

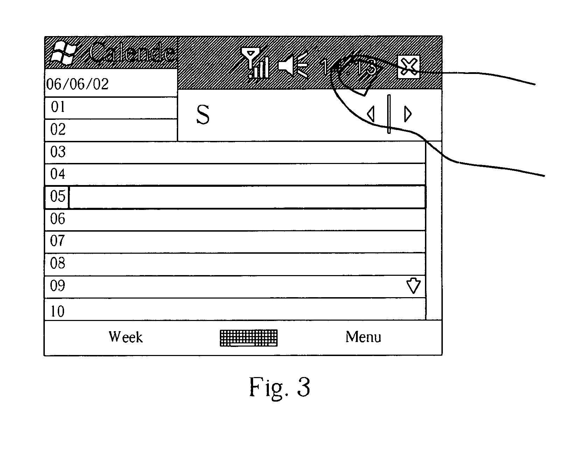

Please refer to Fig. 3, which is a diagram of displaying an enlarged section in a touch screen in response to contact by a large input mechanism according to the present invention. The touch screen is sensitive to physical contact, and displays a user interface for receiving input and displaying output. On the touch screen, within the user interface, are various icons, items or controls, corresponding to functions of the touch screen, or an electronic device the touch screen is electrically coupled to, and for which the touch screen acts as an input/output mechanism.

Similar to the situation shown in Fig. 2 above, the user contacts the touch panel with a relatively large input mechanism, i.e. their finger, in order to activate a specific function represented by an icon displayed in a region of the touch panel being contacted. When the touch screen detects that the contact with the touch panel is coming from the relatively large input mechanism, the touch screen modifies part or all of the user interface displayed in the touch screen to make it easier for the user to select the desired function with the large input mechanism. As shown in Fig. 3, one method for making it easier for the user to select the desired function with the large input mechanism is zooming in on an area around the contact made with the touch screen. Of course, the display could be modified in many other ways, including generating an enlarged list of the icons near the area around the contact made with the touch screen.

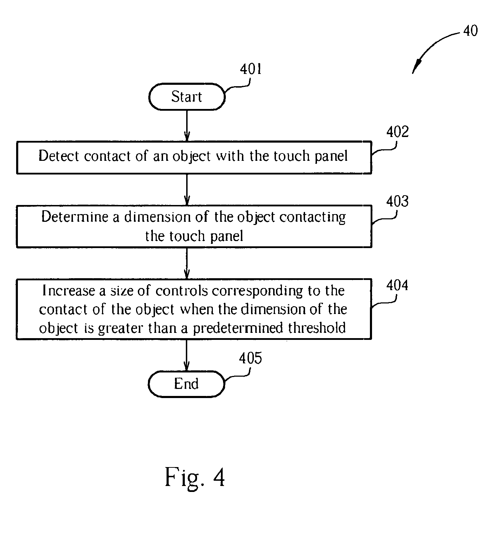

Please refer to Fig. 4, which is a flowchart diagram of a method of displaying controls in the touch panel according to the present invention. The method comprises the following steps:
Step 401: Start.
Step 402: Detect contact of an object with the touch panel.
Step 403: Determine a dimension of the object contacting the touch panel.
Step 404: Increase a size of controls corresponding to the contact of the object when the dimension of the object is greater than a predetermined threshold.
Step 405: End.

In the present invention method, the touch panel detects contact from an input mechanism, and determines the size of the input mechanism based on the dimension of the input mechanism. Determining the dimension of the input mechanism can be accomplished by determining a diameter of the object contacting the touch panel, a longest distance between two points sensed within a short period of time, or an area of a region contacted by the input mechanism. Once the dimension is determined, the dimension is compared with a threshold to determine if the input mechanism is the large input mechanism, e.g. the finger, or a small input mechanism, e.g. a stylus. Once the touch panel determines that the input mechanism is the large input mechanism, the touch panel increases the size of the controls corresponding to the contact of the input mechanism. The enlarging can be accomplished by increasing the size of the controls corresponding to the contact of the input mechanism. Increasing the size of the controls can be performed by zooming in on the region contacted by the input mechanism, or a region comprising the region contacted by the input mechanism. Of course, when the display is zoomed in, sensor regions corresponding to the controls can be enlarged in the input interface to accommodate the zoomed-in controls. Similar to zooming in on the region contacted by the input mechanism, the touch panel could simply enlarge the controls in the vicinity of the region contacted by the input mechanism, without enlarging areas that are not sensitive to contact by the input mechanism.

Once the controls are enlarged in the user interface, the user can easily select the desired control with the large input mechanism. Of course, the present invention method could be activated by a click, i.e. after the input mechanism has ceased contacting the touch panel, or immediately after the input mechanism contacts the touch panel. In the former case, the user would contact the touch panel again to select the desired control. In the latter case, the control contacted by the input mechanism when the input mechanism ceases contacting the touch panel is activated.

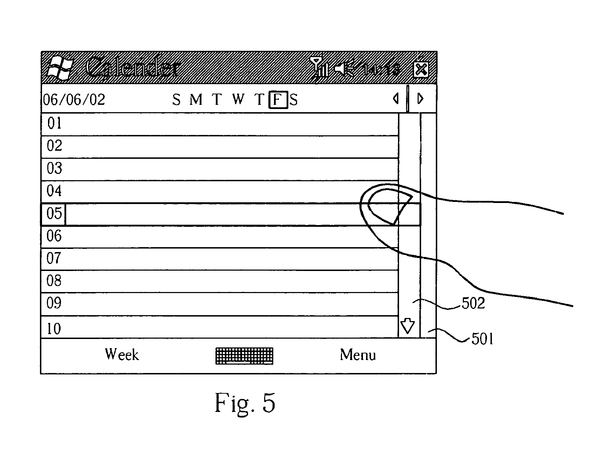

Please refer to Fig. 5, which is a diagram of the user interface displaying a second embodiment of the present invention. In Fig. 5, a user contacts the touch screen with the large input mechanism to activate a scroll bar function located in a scroll bar region 501 on the right side of the touch screen. In this case, the scroll bar region 501 may be too narrow to respond accurately to the user's contact, so the present invention increases the scroll bar region 502 of the scroll bar to accommodate for the large input mechanism. In this embodiment, the display on the touch screen need not be modified to display the scroll bar region 502, i.e. the touch screen continues to display the scroll bar region 501. By simply widening the scroll bar region in software, the object of the present invention can be accomplished.

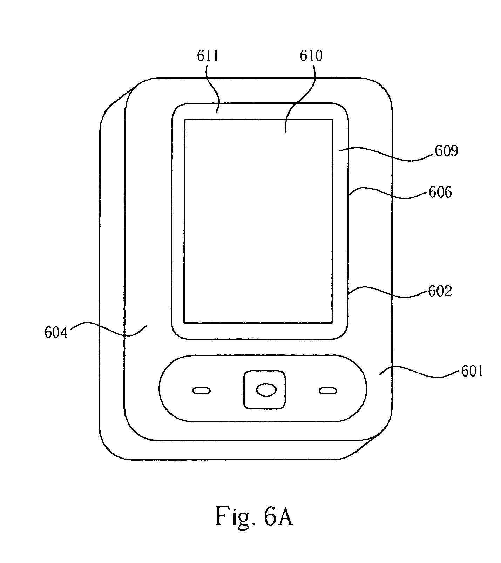

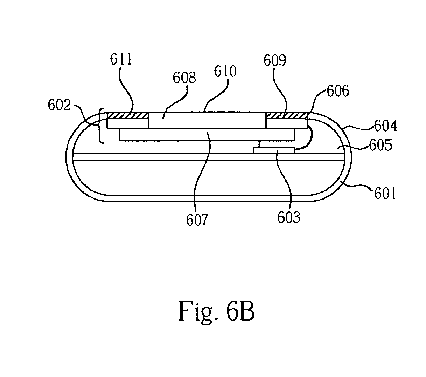

Please refer to Fig. 6A and 6B, which are diagrams of an electronic device for providing unhindered touch operation according to the present invention. The electronic device comprises a housing 601, a touch screen 602, and a processor 603. The housing 601 has an outer surface 604, and a space 605. The space 605 is accessible from outside the housing 601 by an opening 606 on the housing. The touch screen 602 comprises a display 607 and a touch-sensitive device 608. The display 607 is installed in the space 605 in the housing 601. The touch-sensitive device 608 is installed in the opening 606 on the surface 604 of the housing 601, and is used for receiving operation by an input tool. The touch-sensitive device 608 has a touch-sensitive plane 609 comprising a displayed region 610 and a non-displayed region 611. An edge of the opening 606 in the housing 601 is connected smoothly with the touch-sensitive plane 609, and the opening 604 in the housing 601 does not substantially protrude over the touch-sensitive plane 609. The processor 603 is coupled to the display 607 and the touch-sensitive device 608 for determining a type of the input tool, and performing a predetermined function according to the type of the input tool.

The electronic device further comprises a memory coupled to the processor 603 for storing program code. The program code comprises code for detecting contact of the input tool with the touch screen, code for determining the type of the input tool contacting the touch screen and code for increasing a size of the at least one control corresponding to the predetermined function when the dimension of the object is greater than a predetermined threshold.

It is worthy of note that, because the surface 604 of the housing 601 does not substantially protrude over the touch-sensitive plane 609, the surface 604 of the housing 601 and the touch-sensitive plane 609 are approximately a continuous, smooth surface, allowing the input tool to operate and move without hindrance.

The present invention method and related touch screen are particularly suited for mobile devices, including personal digital assistants (PDAs), smart phones, and pocket PCs, and could be implemented in operating systems such as Microsoft Windows Mobile, Microsoft Windows CE, Symbian, Palm, or Linux. Such a device would comprise the touch screen of the present invention, a processor coupled to the touch screen for processing signals sent from the touch screen, a controller coupled to the touch screen and the processor for providing the functions of the mobile device, and a memory coupled to the processor for storing program code. The program code can be seen as the method of the present invention described above.

Compared to the prior art, the present invention method of displaying controls in a touch panel allows a user to utilize a larger input mechanism, such as their finger, to access functions displayed in the touch panel, without increasing the size of the touch panel, or increasing the size of the icons representing the functions. This makes it more convenient for the user to select the icon desired more accurately.

## Claims

1. A method of displaying at least one control in a touch screen comprising:
detecting contact of an object with the touch screen (402);
**characterized by**:
determining a dimension of the object contacting the touch screen (403); and
increasing a size of the at least one control corresponding to the contact of the object when the dimension of the object is greater than a predetermined threshold (404).

2. A mobile device comprising:
a touch screen (602) for displaying at least one control corresponding to functions of the mobile device;
a controller coupled to the touch screen for realizing the functions of the mobile device;
a processor (603) coupled to the controller for processing signals from the controller according to program code; and
a memory coupled to the processor for storing the program code;
wherein the program code comprises:
code for detecting contact of an object with the touch screen (402);
code for determining a dimension of the object contacting the touch screen (403); and
code for increasing a size of the at least one control corresponding to the contact of the object when the dimension of the object is greater than a predetermined threshold (404).

3. An operating system with an advanced user interface running by program code, for handling large input mechanisms on a touch screen (602) which displays at least one control corresponding to functions of a mobile device, and for integration with a processor (603) and a memory in the mobile device, the operating system program code comprising:
code for detecting contact of an object with the touch screen (402);
code for determining a dimension of the object contacting the touch screen (403); and
code for increasing a size of the at least one control corresponding to the contact of the object when the dimension of the object is greater than a predetermined threshold (404).

4. In a system device operating environment integrating hardware including a processor (603), a memory, and a touch screen (602) of the system device, capable of running an application program with program code for handling large input mechanisms on the touch screen, the program code comprising:
code for detecting contact of an object with the touch screen (402);
code for determining a dimension of the object contacting the touch screen (403); and
code for increasing a size of at least one control corresponding to the contact of the object when the dimension of the object is greater than a predetermined threshold (404).

5. A machine-readable medium storing program code for handling large input mechanisms on a touch screen (602), comprising:
the touch screen for displaying at least one control corresponding to functions of the machine-readable medium;
a processor (603) coupled to the touch screen for processing signals from the touch screen according to the program code; and
a memory coupled to the processor for storing the program code;
wherein the program code comprises:
code for detecting contact of an object with the touch screen (402);
code for determining a dimension of the object contacting the touch screen (403); and
code for increasing a size of the at least one control corresponding to the contact of the object when the dimension of the object is greater than a predetermined threshold (404).

6. An electronic device for providing unhindered touch operation comprising:
a housing (601) having an outer surface (604) and an opening (606) thereon;
a touch screen (602) disposed in the opening of the housing for receiving operation from an input tool, wherein the outer surface of the housing is substantially not protruded over a touch-sensitive plane of the touch display;
a processor (603) coupled to the touch display for determining a type of the input tool and executing a predetermined function according to the type of the input tool; and a memory coupled to the processor for storing program code;
wherein the program code comprises:
code for detecting contact of the input tool with the touch screen (402);
code for determining the type of the input tool contacting the touch screen (403); and
code for increasing a size of the at least one control corresponding to the predetermined function when the dimension of the object is greater than a predetermined threshold (403).

7. The method of claim 1, the mobile device of claim 2, the operating system of claim 3, the program code of claim 4, the machine-readable medium of claim 5, and the electronic device of claim 6, **characterized in that** determining the dimension of the object contacting the touch screen comprises determining a diameter of the object contacting the touch screen.

8. The method of claim 7, the mobile device of claim 7, the operating system of claim 7, the program code of claim 7, the machine-readable medium of claim 7, and the electronic device of claim 7, **characterized in that** increasing the size of the at least one control corresponding to the contact of the object when the dimension of the object is greater than the predetermined threshold comprises increasing the size of the at least one control corresponding to the contact of the object when the diameter of the object is greater than a predetermined diameter.

9. The method of claim 1, the mobile device of claim 2, the operating system of claim 3, the program code of claim 4, the machine-readable medium of claim 5, and the electronic device of claim 6, **characterized in that** determining the dimension of the object contacting the touch screen comprises determining an area of the object contacting the touch screen.

10. The method of claim 9, the mobile device of claim 9, the operating system of claim 9, the program code of claim 9, the machine-readable medium of claim 9, and the electronic device of claim 9, , **characterized in that** increasing the size of the at least one control corresponding to the contact of the object when the dimension of the object is greater than the predetermined threshold comprises increasing the size of the at least one control corresponding to the contact of the object when the area of the object is greater than a predetermined area.

11. The method of claim 1, the mobile device of claim 2, the operating system of claim 3, the program code of claim 4, the machine-readable medium of claim 5, and the electronic device of claim 6, **characterized in that** increasing the size of the at least one control corresponding to the contact of the object when the dimension of the object is greater than the predetermined threshold comprises zooming in on a predetermined region comprising the controls.

12. The method of claim 1, the mobile device of claim 2, the operating system of claim 3, the program code of claim 4, the machine-readable medium of claim 5, and the electronic device of claim 6, **characterized in that** increasing the size of the at least one control corresponding to the contact of the object when the dimension of the object is greater than the predetermined threshold comprises displaying the at least one control corresponding to the contact of the object as a list.

13. The method of claim 1, the mobile device of claim 2, the operating system of claim 3, the program code of claim 4, the machine-readable medium of claim 5, and the electronic device of claim 6, **characterized in that** increasing the size of the at least one control corresponding to the contact of the object when the dimension of the object is greater than the predetermined threshold comprises representing the at least one control corresponding to the contact of the object with enlarged icons.
